# EUROPEAN PATENT SPECIFICATION

(11) **EP 1 230 197 B1**
(45) Date of publication and mention of the grant of the patent: **19.11.2003**
(21) Application number: 00960733.4
(22) Date of filing: 21.09.2000
(51) Int. Cl.: C05G 5/00, C05B 19/00, C05C 3/00, C05C 9/00, C05D 1/02, B01J 2/00

(54) **A PROCESS FOR MANUFACTURING COMPOUND FERTILIZER GRANULES**
VERFAHREN ZUR HERSTELLUNG EINER GRANULIERTEN DÜNGEMITTELZUSAMMENSETZUNG
PROCEDE DE FABRICATION DE GRANULES DE FERTILISANT COMPOSE

(30) Priority: 21.09.1999 FI 992021
(43) Date of publication of application: 14.08.2002
(73) Proprietor: Kemira GrowHow Oy, 00180 Helsinki (FI)
(72) Inventor: KIISKI, Harri, FIN-02260 Espoo (FI); POUKARI, Juhani, FIN-02430 Masala (FI)
(74) Representative: Svensson, Johan Henrik
(86) International application number: FI0000805
(87) International publication number: WO01021556

(56) References cited:
- WO-A1-00/00452
- GB-A- 1 462 633
- US-A- 4 008 064

## Description

The present invention relates to an improved process for the preparation of compound fertilizer granules by using solid granulation.

The mechanically mixed fertilizers, or bulk blended fertilizers, allow the production of an infinite number of ratios in regard to their content of primary nutrients. Bulk blending, is however, only a practical proposition as long as the fertilizer materials used in the preparation of the bulk blended fertilizer are well granulated and have not only a close, but also a very similar, granule size distribution. It is difficult to achieve the formation of granules of urea, ammonium sulphate, potassium chloride, monoammonium and diammonium phosphate within very narrow size ranges in a practical manner in conventional granulation devices, such as a rotating drum or pan, or a blunger. These factors influence on the physical quality of blended fertilizers, especially when the blended components are as prilled urea, granulated diammonium phosphate, compacted potassium chloride and coarse crystalline ammonium sulphate. Additionally the use of cheap sources of phosphorous such as rock phosphate is not possible as it is a fine powder. The different particle size distribution results in nonhomogeneous distribution pattern in the field.

In processes where the compound fertilizers are made with steam or water granulation the solid raw materials are crushed and mixed together followed by the granulation step where steam or water is added. In these processes the granulation is sensitive to granulation conditions, e.g. moisture content, temperature, and the resulting product is of a poor physical quality. see "Fertilizer manual ", Kluwer Academic Publishers, 1998, p. 436-437.

In the processes using solid uncrushed raw materials the resulting final product may have an appearance of a bulk blend as the particle size distribution of raw materials, such as mono- and/or diammonium phosphates, and urea is closely to the preferred size distribution of the final product. As the size distribution of the used raw materials is largely different the granules do not have the same chemical composition, see "Fertilizer manual", Kluwer Academic Publishers, 1998, p. 448-449.

In the manufacturing processes containing urea as a solid raw material the crushing is not preferred as it causes significant risk of blockages in the crusher, feed systems used afterwards, as well as in feeding silos containing crushed materials. The mixing of urea together with other solid raw materials needed for the formulation such as e.g. potassium chloride significantly increases the risk of blockages in feeding silos. In a typical process the crushing of oversize raw materials is done before feeding to the granulation drum, see Doshi, S.R., "Fusion blend", Fertilizer Research 30, p. 87-97, 1991. The flowability of urea-containing raw material mixtures can be determined by a test "Flowability during humid exposure" indicating that e.g. urea is non-flowable after 15 minutes, see "Fertilizer manual", Kluwer Academic Publishers, 1998, p. 488.

In the steam/water granulation processes the quality of the potassium chloride is of great importance. The potassium chloride is very often coated with anticaking agents to create hydrophobic properties for storage and transport of the potassium chloride. These properties are well known to create granulation difficulties in water/steam granulation processes. Several test methods in fertilizer industry have been developed to predict the behaviour of potassium chloride in such processes. The granulation of potassium chloride containing NK's and/or NPK's with such a coating requires high temperatures and low water content, and even then the granulation window (the dependency of granulation on temperature and moisture content) is known to be very narrow. The granulation properties and reactivity of coated potassium chloride is significantly improved by crushing it, see Rug, H., Kahle, K., Tailoring potash to the needs of the fertilizer industry, Proceedings of the fertilizer society, No 297. 1990.

Granule formation in processes using solid raw materials is mainly based on agglomeration whereas with slurry processes the granule formation is based on accretion. The raw material and fine recycle will often not agglomerate into product size granules if they are too large. They will simply accumulate, eventually overloading the system. Therefore crushing of a part of the coarse grade raw materials is essential. Also, the efficient crushing of coarse size raw materials is essential to ensure that the particle size distribution, and therefore the surface area of the material into the granulator is reasonably uniform. The agglomerated products are normally weaker than granules formed by accretion, see Schultz, J., Production of granular NPK's in ammonium phosphate plants. IFDC, 1989.

In addition the use of smaller size of raw materials will significantly improve the physical properties of the final, agglomerated product. The final product is more round, and contains less edges, noses (efflorescence) thus reducing the contact area between granules and reduces the caking tendency. The flowability of the final product is significantly improved thus resulting in more uniform spreading pattern while fertilizer is applied to the soil.

Our previous patent application PCT/FI99/00568 (WO 00/00452) presents several advantages over the granulation methods of the prior art technology because the raw materials are granulated without the aid of water or any other liquid such as ammonia, phosphoric acid or sulphuric acid. Because water or any liquid is not added, there is no need for drying of the product. This makes the granulation operation more simple and investment costs less expensive because no separate equipment for drying is needed. In this process the variations in the moisture content of the total feed resulting from flowing recycle require continuous adjustment of the melter temperatures thus causing the granulation to shift between over- and undergranulation especially when the difference in moisture content of the recycle is much less than that of the raw materials.

Now it has been found that compound fertilizers with a simplified process lay-out and good physical quality are achieved by the improved process of the present invention. The present process is an improvement to the process described in the patent application PCT/FI99/00568 (WO 00/00452). The main features of the present process are set forth in the enclosed claims.

Thus it has been realized that the above mentioned drawbacks of earlier processes can be avoided by using an improved process for the preparation of compound fertilizer granules containing at least two of the plant nutrients nitrogen, phosphorous and potassium, said process comprising the steps of:
(a) mixing solid fertilizer raw materials and recycled oversize material,
(b) crushing the mixture,
(c) optionally mixing the crushed mixture with recycled undersize material to provide a solid feed material having a desired composition,
(d) feeding the feed material to a melter and introducing hot air into said melter for heating the feed material and for melting a desired portion thereof and keeping said portion in molten state,
(e) feeding the partly molten feed material from the melter to a granulator to obtain a granulated product, and
(f) cooling and screening the granulated product to obtain dry compound fertilizer granules having a desired size distribution.

The obtained dry compound fertilizer granules preferably have a size of from about 2 mm to about 5 mm. The oversize material obtained in the screening preferably has a size of above 5 mm, and the undersize material obtained in the screening preferably has a size of below 2 mm.

In step (b) the mixture of solid fertilizer raw materials and recycled oversize material is crushed preferably such that between 95 and 100% of the crushed material has a size of below 2 mm.

Preferably also the undersize material is recycled and mixed with the crushed material.

According to a preferred embodiment of the invention the process is carried out continuously, and the molten portion of the feed material is kept constant during the process by controlling the flow rate of the feed material and the temperature of the hot air introduced into the melter. The optimal proportion of the molten feed material is dependent on the grade of the fertilizer wanted and the raw materials used. The optimal proportion of the molten material can for example be about 10-40% by weight, preferably about 10-25% by weight, more preferably about 12-20% by weight, depending on the grade.

A suitable temperature of the hot air introduced into the melter is between 300 °C and 700 °C. At the melter outlet the hot air has a temperature of about 90 °C to 120 °C.

Suitably the temperature of the partly molten feed leaving the melter is between 70 °C and 110 °C.

The feed material to be fed to the melter can be preheated. This is preferred in view of the temperature control of the process. The material can suitably be preheated to a temperature in the range from about 50 °C to about 110 °C.

The process of the invention can be carried out without introducing water or any other aqueous liquid such as ammonia, phosphoric acid or sulphuric acid into the process. However, the process of the invention can also be carried out by introducing a small quantity of water or other aqueous liquid into the process. The purpose of the addition of the small quantity of water is to balance the effect of varying moisture contents of the raw materials and the recycled materials. This makes it possible to keep a constant moisture content in the feed material entering the inlet of the melter. and this in turn enables to keep the temperature of the melter constant resulting in a controlled melting and good granulation in the subsequent granulator. This is especially the case where the recycle has a much lower moisture content than the raw materials.

Said small quantity of water is preferably added to said solid feed material to be fed to the melter.

Said small quantity of water is preferably in maximum 10 kg per ton of the solid feed material, more preferably less than 5 kg per ton.

The granulation temperature can vary depending on the formula of the fertilizer. The granulation temperature is preferably between about 75 °C and about 125 °C, more preferably between about 80 °C and about 125 °C.

The temperature of the cooled granulated product to be screened is typically between about 40 °C and about 60 °C. The temperature of the recycle material from the screening is typically about 60 °C or less.

Typical solid fertilizer raw materials which can be used in the present invention are e.g. urea, diammonium phosphate (DAP), potassium sulphate (SOP), monoammonium phosphate (MAP), potassium chloride (MOP), phosphate rock, single superphosphate (SSP), triple superphosphate (TSP), ammonium sulphate (AS) and ammonium chloride (AC).

Preferably the fertilizer raw materials comprise urea and at least one other of said fertilizer raw materials.

Additionally one or several secondary nutrients such as magnesium sulphate can be added.

Furthermore one or several fillers such as bentonite, calcite, calcium oxide, anhydrous calcium sulphate, calcium sulphate hemihydrate, dolomite and/or sand can be added.

The melter and granulator can be separate units but the melter and granulator can also be part of the same equipment. As the process allows significantly higher temperatures than water/steam granulation based urea NPK processes the final product can be obtained with a low moisture content thus improving physical properties. The final product will have a low water content of below 1% by weight, preferably below 0.6% by weight. Thus, no supplementary drying is required.

The present invention is developed to solve the granulation, product quality, and storage etc. problems in manufacturing of compound fertilizers.

Particularly, the process of the present invention has great advantages as it removes a great part of the risks related to the feed of crushed urea in the process, improves the granulation by breaking down the hydrophobic coating of certain potassium chlorides, results in uniform chemical composition in each granule of the final product, and improves the granulation characteristics.

In this invention solid commercially available fertilizer materials can be used. The fertilizer materials do not have specific requirements to their size distribution as they are crushed to finely divided feed material. The improved process is not limited in the use raw materials, e.g. materials which are lumpy, coarse, coated, crystalline or caked materials or water damaged materials can be used thus reducing the raw material costs of the process. The possible blockages in feeding equipment, feeding silos, screw conveyors thus causing unstable feed to the process and in worst case plant stop downs, are eliminated by on line- crushing of the raw materials. The alternative route of screening the raw materials before dosing can be eliminated. Additionally the mixing with the dry oversize material significantly improves the crushing of the mixture. The efficiency of the crushing is such that between 95 and 100% of the material passes the size of 2 mm which is enough to prevent the presence of visible raw material particles in the final product. The crushing to much finer size gives additional improvements to granulation. All commercially available crushers, which are typically used in relation to produce urea based NK and/or NP and/or NPK fertilizers can be applied in the process.

The efficiency of crushing on potassium chloride can be checked by the use of known test methods, such as "water drop test"(test to measure time for moisture penetration), "Enslin test" (test to measure moisture absorption). "Rate of dissolution by measuring the heat of dissolution" (test to measure rate of dissolution), and "Sausage test" (test to indicate hydrophobic property of the potassium chloride), see Rug, H., Kahle, K., Tailoring potash to the needs of the fertilizer industry, Proceedings of the fertilizer society. No 297, 1990.

The invention is further described in the following examples without, however, being limited thereby.

### Example 1

### Bench scale process for solid granulation

| | | |
|---|---|---|
| Grade | NPK 12-12-17+2MgO+0.5B2O3 | |
| | | |
| Formulation | Urea | 264 kg/t |
| | Marocco phosphate | 270 kg/t |
| | Triple superphosphate | 89 kg/t |
| | Potassium chloride | 284 kg/t |
| | Magnesium sulphate | 64 kg/t |
| | Colemanite | 6 kg/t |

The mixture of the solid raw materials and recycled oversize material was crushed to a particle size of 100% less than 2 mm. The crushed mixture was preheated to about 100 °C in the feeding screw of the granulator. Melting happened with hot air in the granulation drum. Granulation was carried out at the granulator and partly at the cooling drum. Subsequently the cooled granulated product was screened to obtain the product granules. The oversize material (> 5 mm) was recycled.

The product was coated with SK Fert FW5 AG 2 kg/t and talcum 3 kg/t.

Very good or good granulation was obtained with a good product quality. The product was very homogenous. No separate raw materials can be seen in it. The process conditions and results are shown below.

| Process conditions: | |
|---|---|
| Feed and recycle | 5.3 kg/h |
| Recycle ratio | 0.80 |
| Granulation temperature | 120 °C |
| Air from cooler | 27 °C |
| Granulation | Good |

| Product properties: | |
|---|---|
| Chemical analysis | |
| Water | 0.35 % |
| Urea- N | 12.4 % |
| P2O5- Total | 12.2 % |
| P205- NAC | 6.0 % |
| P205- WS | 2.8 % |
| K2O | 18.8 % |
| Mg | 1.5 % |
| B | 0,75 % |
| pH | 4.8 |

| Physical properties | |
|---|---|
| Granule strength | 40 N |
| Abrasion | 0.1 % |
| Volume weight | 0.82 kg/l |
| Flowability | 5.4 kg/min |
| CRH | 23 % |

| Moisture absorption | |
|---|---|
| - after 2 h | 3.2 % |
| - after 4 h | 5.5 % |
| - after 6 h | 8.0 % |

### Example 2

### Bench scale process for solid granulation

| | | |
|---|---|---|
| Grade | NPK 12-6-24 | |
| | | |
| Formulation | Urea | 264 kg/t |
| | Marocco phosphate | 130 kg/t |
| | Single superphosphate | 100 kg/t |
| | Potassium chloride | 400 kg/t |
| | Bentonite | 80 kg/t |
| | Colemanite | 6 kg/t |

The mixture of the solid raw materials and recycled oversize material was crushed to a particle size of 100% less than 2 mm. The crushed mixture was preheated to about 100 °C in the feeding screw of the granulator. Melting happened with hot air in the granulation drum. Granulation was carried out at the granulator and partly at the cooling drum. Subsequently the cooled granulated product was screened to obtain the product granules. The oversize material (> 5 mm) was recycled.

The product was coated with SK Fert FW5 AG 2 kg/t and talcum 3 kg/t.

Very good or good granulation was obtained with a good product quality. The product was very homogenous. No separate raw materials can be seen in it. The process conditions and results are shown below.

| Process conditions: | |
|---|---|
| Feed and recycle | 5.1 kg/h |
| Recycle ratio | 0.84 |
| Granulation temperature | 120 °C |
| Air from cooler | 28 °C |
| Granulation | Good |

| Product properties: | |
|---|---|
| Chemical analysis | |
| Water | 0.27 % |
| Urea- N | 13.1 % |
| P2O5- Total | 6.0 % |
| P2O5- NAC | 2.9 % |
| P2O5- WS | 0.84 % |
| K2O | 25.8 % |
| B | 0.85 % |
| pH | 6.1 |

| Physical properties | |
|---|---|
| Granule strength | 39 N |
| Abrasion | 0.1 % |
| Volume weight | 0.84 kg/l |
| Flowability | 5.6 kg/min |
| CRH | 15 % |

| Moisture absorption | |
|---|---|
| - after 2 h | 2.1 % |
| - after 4 h | 4.1 % |
| - after 6 h | 6.0 % |

### Example 3

### The effect of the crushing of potassium chloride (MOP) on the wettability

The effect of the crushing of commercially available potassium chloride was studied in the laboratory by the known wettability test methods.

**Table 1**

| **The effect of crushing on the wettability of potassium chloride** | | | |
|---|---|---|---|
| **Sample** | **Water drop test [s]** | **Rate of dissolution measured by the heat of dissolution [s]** | **Enslin test [cm3/g]** |
| Hydrophobic MOP | 26131 | 75 | 0.0 |
| Crushed hydrophobic MOP | 20 | 35 | 9.6 |
| Normal MOP | 58 | 100 | 0.0 |
| Crushed normal MOP | 20 | 42 | 0.7 |

The crushing of potassium chloride (MOP) improves the wettability and thus the use of different potassium chloride qualities (different coating) is not limited. There is also a notable improvement on the wettability of normal potassium chloride.

### Example 4

### The effect of varying moisture content of the total feed

### 4a

The solid raw material mixture contained 2.5% of moisture and the recycle of the process in average 0.8% of moisture. The granulation was adjusted to fixed temperature of the material in the outlet of the melter. The moisture content of the feed material in the inlet of the melter varied as presented in table 2.

**Table 2**

| **The effect of varying moisture content of the total feed.** | | | | |
|---|---|---|---|---|
| **Raw material feed [kg/h]** | **Recycle feed [kg/h]** | **Moisture content of the total feed to the melter [%]** | **Addition of water [kg/t]** | **The moisture content of the new total feed to the melter [%]** |
| 15 | 5 | 2.10 | 0 | 2.10 |
| 15 | 10 | 1.82 | 2.8 | 2.10 |
| 15 | 15 | 1.65 | 4.5 | 2.10 |

### 4b

The solid raw material mixture contained 1.5% of moisture and the recycle of the process in average 0.8% of moisture. The granulation was adjusted to fixed temperature of the material in the outlet of the melter. The moisture content of the feed material in the inlet of the melter varied as presented in table 3.

**Table 3**

| **The effect of varying moisture content of the total feed.** | | | | |
|---|---|---|---|---|
| **Raw material feed [kg/h]** | **Recycle feed [kg/h]** | **Moisture content of the total feed to the melter [%]** | **Addition of water [kg/t]** | **The moisture content of the new total feed to the melter [%]** |
| 15 | 5 | 1.32 | 0 | 1.32 |
| 15 | 10 | 1.22 | 1.1 | 1.32 |
| 15 | 15 | 1.15 | 1.7 | 1.32 |

The examples indicate the need of small addition of water to keep constant moisture content of the feed material in the inlet to the melter.

### Example 5

### Bench scale process for solid granulation

| | | |
|---|---|---|
| Grade | NK 16-0-31 | |
| | | |
| Formulation | Urea | 348 kg/t |
| | KCl | 517 kg/t |
| | Bentonite | 125 kg/t |

The mixture of the solid raw materials and recycled oversize material was crushed to a particle size of 100% less than 2 mm. The crushed mixture was preheated to about 100 °C in the feeding screw of the granulator. Melting happened with hot air in the granulation drum. Granulation was carried out at the granulator and partly at the cooling drum. Subsequently the cooled granulated product was screened to obtain the product granules. The oversize material (> 5 mm) was recycled.

The product was coated with SK Fert FW5 AG 2 kg/t and talcum 3 kg/t.

Good or moderate granulation was obtained with a good product quality. The product was very homogenous. No separate raw materials can be seen in it.

The process conditions and results are following:

| Process conditions: | |
|---|---|
| Feed + recycle | 4.4 kg/h |
| Recycle ratio | 1.4 |
| Granulation temperature | 110 °C |
| Air from cooler | 27 °C |

| Product properties: | |
|---|---|
| Chemical analyses | |
| Water (Karl Fischer) | 0.16 % |
| Urea - N | 16.2 % |
| K₂O | 31.8 % |
| pH | 8.1 |

| Physical properties: | |
|---|---|
| Granule strenght | 52 N |
| Abrasion | 0.3 % |
| Bulk density (loose) | 0.84 kg/l |
| Flowability | 5.5 kg/min |
| CRH | 23 % |

| Moisture absorption | |
|---|---|
| 80% RH | |
| 2 h | 3.0 % |
| 4 h | 4.9 % |
| 6h | 7.0 % |

### Example 6

### Bench scale process for solid granulation

| | | |
|---|---|---|
| Grade | NPK 15-15-15 | |
| | | |
| Formulation | Urea | 267 kg/t |
| | DAP (17-45) | 167 kg/t |
| | Yunnan rock | 259 kg/t |
| | KCl | 250 kg/t |
| | Bentonite | 37 kg/t |

The mixture of the solid raw materials and recycled oversize material was crushed to a particle size of 100% less than 2 mm. The crushed mixture was preheated to about 100 °C in the feeding screw of the granulator. Melting happened with hot air in the granulation drum. Granulation was carried out at the granulator and partly at the cooling drum. Subsequently the cooled granulated product was screened to obtain the product granules. The oversize material (> 5 mm) was recycled.

The product was coated with SK Fert FW5 AG 2 kg/t and talcum 3 kg/t.

The process conditions and results are following:

| Process conditions: | |
|---|---|
| Feed + recycle | 4.8 kg/h |
| Recycle ratio | 0.75 |
| Granulation temperature | 105 °C |
| Air from cooler | 26 °C |
| Granulation | Good |

| Product properties: | |
|---|---|
| Chemical analyses | |
| Water (Karl Fischer) | 0.11 % |
| Urea - N | 12.9 % |
| NH₄ - N | 2.4 % |
| N | 15.3 % |
| P₂O₅- Total | 14.8 % |
| P₂O₅- NAC | 8.1 % (55%) |
| P₂O₅ - WS | 6.6 % (45%) |
| K₂O | 17.7 % |
| Cl | 12.9 % |
| S | 0.9 % |
| pH | 6.5 |

| Physical properties | |
|---|---|
| Granule strenght | 50 N |
| Abrasion | 0.0 % |
| Bulk density (loose) | 0.87 kg/l |
| Flowability | 5.8 kg/min |
| CRH | 31 % |

| Moisture absorption | |
|---|---|
| 80% RH | |
| 2h | 2. 9 % |
| 4h | 5.2 % |
| 6h | 7.8 % |

## Claims

1. A process for the preparation of compound fertilizer granules containing at least two of the plant nutrients nitrogen, phosphorous and potassium, said process comprising the steps of:
(a) mixing solid fertilizer raw materials and recycled oversize material,
(b) crushing the mixture,
(c) optionally mixing the crushed mixture with recycled undersize material to provide a solid feed material having a desired composition,
(d) feeding the feed material to a melter and introducing hot air into said melter for heating the feed material and for melting a desired portion thereof and keeping said portion in molten state,
(e) feeding the partly molten feed material from the melter to a granulator to obtain a granulated product, and
(f) cooling and screening the granulated product to obtain dry compound fertilizer granules having a desired size distribution.

2. A process according to claim 1, wherein the process is carried out continuously, and the molten portion of the feed material is kept constant during the process by controlling the flow rate of the feed material and the temperature of the hot air introduced into the melter.

3. A process according to claim 1 or 2, wherein the temperature of the partly molten feed material is between 70 °C and 110 °C.

4. A process according to any of claims 1-3, wherein the temperature of the hot air introduced into the melter is between 300 °C and 700 °C.

5. A process according to any of claims 1-4, wherein from 10 to 40% by weight of the feed material melts in the melter.

6. A process according to ay of claims 1-5, wherein the melting is controlled by introduction of small quantity of water to balance the effect of varying moisture contents of the raw materials and the recycled oversize and optionally undersize materials.

7. A process according to claim 6, wherein the small quantity of water is added to said solid feed material to be fed to the melter.

8. A process according to claim 6 or 7, wherein the small quantity of water is in maximum 10 kg/t, and preferably less than 5 kg/t.

9. A process according to any of claims 1-8, wherein the fertilizer raw materials are selected from the group of consisting of urea, diammonium phosphate (DAP), potassium sulphate (SOP), monoammonium phosphate (MAP), potassium chloride (MOP), phosphate rock, single superphosphate (SSP), triple superphosphate (TSP), ammonium sulphate (AS) and ammonium chloride (AC).

10. A process according to claim 9, wherein the fertilizer raw materials comprise urea and at least one other of said fertilizer raw materials.

11. A process according to any of claims 1-10, wherein additionally at least one material selected from the group consisting of secondary nutrients such as magnesium sulphate is introduced into the process.

12. A process according to any of claims 1-11, wherein additionally at least one filler selected from the group consisting of bentonite, calcite, calcium oxide, anhydrous calcium sulphate, calcium sulphate hemihydrate, dolomite, and sand, is introduced into the process.

13. A process according to claim 1, wherein the undersize material obtained in the screening is recirculated as said undersize material.

14. A process according to any of claims 1-13, wherein the moisture content of the dry compound fertilizer granules is below 1.0% by weight, preferably below 0.6% by weight.

## Patentansprüche

1. Verfahren zur Herstellung von Mischdüngerkörnern, die wenigstens zwei der Pflanzennährstoffe Stickstoff, Phosphor und Kalium enthalten, welches Verfahren die Schritte aufweist:
(a) feste Düngerrohmaterialien und rezykliertes Übergrößenmaterial zu mischen,
(b) die Mischung zu zerkleinern,
(c) wahlweise die zerkleinerte Mischung mit rezykliertem Untergrößenmaterial zu mischen, um ein festes Speisematerial mit einer gewünschten Zusammensetzung zu schaffen,
(d) das Speisematerial einer Schmelzvorrichtung zuzuführen und heiße Luft in die Schmelzvorrichtung einzuführen, um das Speisematerial zu erhitzen und einen gewünschten Teil desselben zu schmelzen und um diesen Teil im geschmolzenen Zustand zu halten,
(e) das teilweise geschmolzene Speisematerial von der Schmelzvorrichtung einem Granulator zuzuführen, um eine granuliertes Erzeugnis zu erhalten und
(f) das granulierte Produkt zu kühlen und zu sieben, um trockene Mischdüngerkörner zu erhalten, die die gewünschte Größenverteilung haben.

2. Verfahren nach Anspruch 1, bei dem das Verfahren kontinuierlich durchgeführt wird und der geschmolzene Anteil des Speisematerials während des Verfahrens konstant gehalten wird, indem die Strömungsrate des Speisematerials und die Temperatur der Heißluft, die in die Schmelzvorrichtung eingeführt wird, gesteuert oder geregelt werden.

3. Verfahren nach Anspruch 1 oder 2, bei dem die Temperatur des teilweise geschmolzenen Speisematerials zwischen 70°C und 110°C ist.

4. Verfahren nach einem der Ansprüche 1 bis 3, bei dem die Temperatur der Heißluft, die in die Schmelzvorrichtung eingeführt wird, zwischen 300°C und 700°C ist.

5. Verfahren nach einem der Ansprüche 1 bis 4, bei dem von 10 bis 40 Gew.% des Speisematerials in der Schmelzvorrichtung schmilzt.

6. Verfahren nach einem der Ansprüche 1 bis 5, bei dem das Schmelzen durch Einführen einer kleinen Menge von Wasser gesteuert oder geregelt wird, um die Wirkung variierenden Feuchtigkeitsgehalts der Rohmaterialien und des rezyklierten Übergrößenmaterials und wahlweisen Untergrößenmaterials auszugleichen.

7. Verfahren nach Anspruch 6, bei dem die kleine Menge von Wasser dem festen Speisematerial zugeführt wird, das der Schmelzvorrichtung zugeführt werden soll.

8. Verfahren nach Anspruch 6 oder 7, bei dem die kleine Menge von Wasser höchstens 10 kg/t und vorzugsweise weniger als 5 kg/t ist.

9. Verfahren nach einem der Ansprüche 1 bis 8, bei dem die Düngerrohmaterialien aus der Gruppe ausgewählt werden, die aus Harnstoff, Diammoniumphophat (DAP), Kaliumsulfat (SOP), Monoammoniumphosphat (MAP), Kaliumchlorid (MOP), Phosphaterz, einfachem Superphosphat (SSP), dreifachem Superphosphat (TSP), Ammoniumsulfat (AS) und Ammoniumchlorid (AC) besteht.

10. Verfahren nach Anspruch 9, bei dem die Düngerrohmaterialien Harnstoff und wenigstens ein anderes der Düngerrohmaterialien aufweisen.

11. Verfahren nach einem der Ansprüche 1 bis 10, bei dem zusätzlich wenigstens ein Material in das Verfahren eingeführt wird, das aus der Gruppe ausgewählt wird, die aus Sekundärnährstoffen wie Magnesiumsulfat besteht.

12. Verfahren nach einem der Ansprüche 1 bis 11, bei dem zusätzlich wenigstens ein Füllstoff in das Verfahren eingeführt wird, der aus der Gruppe ausgewählt wird, die aus Bentonit, Calcit, Calciumoxid, wasserfreiem Calciumsulfat, Calciumsulfat-halbhydrat, Dolomit und Sand besteht.

13. Verfahren nach Anspruch 1, bei dem das Untergrößenmaterial, das bei dem Sieben erhalten wird, als das Untergrößenmaterial rückgeführt wird.

14. Verfahren nach einem der Ansprüche 1 bis 13, bei dem der Feuchtigkeitsgehalt der trockenen Mischdüngerkörner niedriger ist als 1 Gew.%, vorzugsweise unterhalb 0,6 Gew.%.

## Revendications

1. Procédé de préparation de granulés de composé fertilisant contenant au moins deux des substances nutritives pour les plantes constituées par l'azote, le phosphore et le potassium, ledit procédé comprenant les étapes consistant à :
(a) mélanger des matières premières pour fertilisant solides et un matériau déclassé supérieur recyclé,
(b) concasser le mélange,
(c) mélanger éventuellement le mélange concassé avec un matériau déclassé inférieur recyclé pour obtenir un matériau de charge solide présentant la composition voulue,
(d) charger le matériau de charge solide dans un dispositif de fusion et introduire de l'air chaud dans ledit dispositif de fusion pour chauffer le matériau de charge et pour fondre une partie voulue de celui-ci et maintenir ladite partie à l'état fondu,
(e) introduire le matériau de charge partiellement fondu provenant du dispositif de fusion dans un appareil granulateur pour obtenir un produit en granulés, et
(f) refroidir et tamiser le produit en granulés pour obtenir des granulés de composé fertilisant secs présentant la distribution de tailles voulue.

2. Procédé selon la revendication 1, dans lequel on effectue le procédé en mode continu, et on maintient constante la partie fondue du matériau de charge pendant le procédé en réglant le débit du matériau de charge et la température de l'air chaud introduit dans le dispositif de fusion.

3. Procédé selon la revendication 1 ou 2, dans lequel la température du matériau de charge partiellement fondu est comprise entre 70 °C et 110 °C.

4. Procédé selon l'une quelconque des revendications 1 à 3, dans lequel la température de l'air chaud introduit dans le dispositif de fusion est comprise entre 300 °C et 700 °C.

5. Procédé selon l'une quelconque des revendications 1 à 4, dans lequel de 10 à 40 % en poids du matériau de charge fond dans le dispositif de fusion.

6. Procédé selon l'une quelconque des revendications 1 à 5, dans lequel on règle la fusion en introduisant de petites quantités d'eau pour contrebalancer l'effet de variation des teneurs en humidité des matières premières et des matériaux déclassés supérieurs et éventuellement inférieurs recyclés.

7. Procédé selon la revendication 6, dans lequel on ajoute la petite quantité d'eau à ladite matière de charge solide que l'on doit introduire dans le dispositif de fusion.

8. Procédé selon la revendication 6 ou 7, dans lequel la petite quantité d'eau est au maximum de 10 kg/t, et de préférence inférieure à 5 kg/t.

9. Procédé selon l'une quelconque des revendications 1 à 8, dans lequel les matières premières pour engrais sont choisies dans le groupe constitué par l'urée, le phosphate diammonique (DAP), le sulfate de potassium (SOP), le phosphate de monoammonium (MAP), le chlorure de potassium (MOP), le phosphate de calcium minéral, le superphosphate simple (SSP), le superphosphate triple (TSP), le sulfate d'ammonium (AS) et le chlorure d'ammonium (AC).

10. Procédé selon la revendication 9, dans lequel les matières premières pour engrais comprennent de l'urée et au moins une autre desdites matières premières pour fertilisant.

11. Procédé selon l'une quelconque des revendications 1 à 10, dans lequel on introduit, en plus, dans le procédé, au moins un matériau choisi dans le groupe constitué par des substances nutritives secondaires comme le sulfate de magnésium.

12. Procédé selon l'une quelconque des revendications 1 à 11, dans lequel on introduit, en plus, dans le procédé, au moins une charge choisie dans le groupe constitué par la bentonite, la calcite, l'oxyde de calcium, le sulfate de calcium anhydre, le semi-hydrate de sulfate de calcium, la dolomite et le sable.

13. Procédé selon la revendication 1, dans lequel le matériau déclassé inférieur obtenu lors du tamisage est recyclé sous la forme dudit matériau déclassé inférieur.

14. Procédé selon l'une quelconque des revendications 1 à 13, dans lequel la teneur en humidité des granulés de composé fertilisant secs est inférieure à 1,0 % en poids, et de préférence inférieure à 0,6 % en poids.
